# EUROPEAN PATENT APPLICATION

(11) **EP 1 839 967 A1**
(43) Date of publication of application: **03.10.2007**
(21) Application number: 07251375.7
(22) Date of filing: 29.03.2007
(51) Int. Cl.: B60R 22/48

(54) **An electronic warning system for a buckle used with a harness**

(30) Priority: 29.03.2006 AU 2006901590
(71) Applicant: Britax Childcare Pty Ltd., Sunshine, VIC 3020 (AU)
(72) Inventor: Peeler, Andrew, Launching Place 3139 Victoria (AU); Scicluna, Godfrey, Sunshine 3020 Victoria (AU)
(74) Representative: Ablett, Graham Keith

(57) **Abstract**

The invention is a buckle having a means for providing an alert upon the use of the buckle comprising a buckle body 16, at least one buckle connector 30 that releasably connects to the buckle body 16, a buckle mechanism 10 within the buckle body 16 that latches with respect to the buckle body 16, the buckle mechanism 10 also being operable to release the buckle connector 30, a signal module 14 attached with respect to the buckle body 16 produces an alert signal, switch means 13 on the signal module 14 that, when operated, causes the signal module 14 to produce an alert signal, and an actuator 12 that is moved by either the buckle mechanism 10 or the buckle connector 30 to operate the switch means 13 when the buckle connector 30 connects or disconnects to the buckle body 16. The invention provides a means if indicating when the buckle is properly connected and also when the buckle is being disconnected. This will provide an alarm when the buckle is being inadvertently released.

## Description

This invention relates to a warning system for a buckle used with a safety harness and although the invention will have broad application, one example of its use will be in relation to buckles used with seatbelt harnesses in motor vehicles.

However, the invention is not to be limited to this particular application. There will be numerous other circumstances where a buckle is used to secure webbing and where it would be useful for an indication to be provided if the buckle is released or not connected properly.

A motor vehicle harnesses, particularly those used in child restraints, use buckles to secure a harness. The buckle normally comprises a body into which connectors releasably connect to the buckle body and a mechanism in the buckle body allows for the attachment and release of the buckle connectors.

A significant safety issue is the misuse of buckles. Firstly, it is possible for buckle connectors to be not properly latched into the buckle body. Secondly, inadvertent release of the buckles by a child part-way through a journey may not be noticed. Both situations are extremely dangerous and will lead to failure of the harness in the event of an accident.

It is an objective of this invention to provide an alarm for at least one of the misuse circumstances described above.

In one aspect, the invention is a buckle having a means for providing an alert upon use of the buckle comprising:
a buckle body,
at least one buckle connector that releasably connects to the buckle body,
a buckle mechanism within the buckle body that latches to the buckle connector to hold it with respect to the buckle body, the buckle mechanism also being operable to release the buckle connector,
a signal module attached with respect to the buckle body that produces an alert signal,
switch means on the signal module that, when operated, causes the signal module to produce the alert signal, and
an actuator that is moved by either the buckle mechanism or the buckle connector to operate the switch means when the buckle connector connects or disconnects to the buckle body.

In this aspect of the invention, the signal module may comprise a housing and circuit board that is secured to an existing buckle with the actuator located between to thereby operate the switch means.

In another aspect of the invention, the actuator may comprise a resilient member that is located between the buckle mechanism and the switch means where the resilient member is compressed in a first position by the buckle mechanism to thereby operate the switch means and is not compressed in a second position to not operate the switch means, the first or second position of the mechanism corresponding to a position where an alert signal is to be provided and the switch means activating the signal module is to provide an alert signal.

Preferably, the actuator or resilient means is located between the buckle mechanism and the switch means, but it may be another component of the buckle, such as the buckle connector, that operates the actuator.

The position where an alert signal is produced may comprise the initial insertion of the buckle connector to sense movement of the buckle mechanism into the position where the buckle connector is latched. In other words, the signal module provides an alert signal when the buckle connector is properly and securely connected to the buckle body.

An alert signal can also be provided upon release of the buckle connector from the buckle body. This will provide an indication when the buckle connector is released from the buckle body.

In addition, the invention may provide an alert signal in both positions.

The alert signal can be of any convenient form. It may be a visual alarm such as lights on the buckle or on the dashboard of a motor vehicle. The signal module may further comprise a transmitter which transmits a signal to a dashboard mounted display means.

Preferably, the alarm is audible and the signal module includes a speaker.

The buckle mechanism may comprise a latching bar that is spring-loaded. Upon connection of the buckle connector, the spring-loaded latching bar is released and moves into this second position where the latching bar operates to hold the buckle connector. For example, the buckle connector may comprise an elongate tongue having an aperture and the latching bar may have a projection that locates within the aperture to prevent withdrawal of the tongue.

In order to release the buckle connector, the latching bar is depressed and locked into its first position whereupon the buckle connector is released.

Preferably, the signal module senses the two positions of the latching bar.

The actuator or resilient member may comprise an elongate rod or pin which has one end that abuts against the latching bar with the other end abutting against the switch on the electronic means.

In the first position, in the case of a resilient member, it is compressed between the latching bar and the switch means. Preferably, the switch means comprises a spring-loaded member and the compression of the resilient member is sufficient to close the switch.

Upon movement of the latching bar to the second position, the resilient member is no longer compressed and therefore the spring-loaded switch means opens. This can allow for activation of the signal module.

Likewise, when the latching bar moves from its second position to its first position, the resilient member is again compressed and operates the switch means. This again allows for an activation signal to be provided by the signal module.

The same would occur for a non-resilient actuator. Instead of it compressing, the movement required to operate the switch is matched to the amount of movement of the latching bar. In this case a metal pin may be used. Further, the actuator may be a combination of resilient and non-resilient members. For example, a metal pin may be combined with a resilient extension that is attached to one or both ends. Also the switch may be spring-loaded to ensure that it opens.

Further, the signal module may be operated by any slight movement of the latching bar. This may occur if for example, a child is attempting to press a release button on the buckle mechanism. The actuator or resilient member can be arranged so that even slight movement of the latching bar is sufficient to operate the switch to in turn activate the signal module.

Preferably, the signal module comprises a separate housing which is securable with respect to the buckle body. In this arrangement, the actuator or resilient member is located between the signal module and the latching bar and there may be an aperture in the buckle body through which the actuator or resilient member projects.

Preferably, sufficient waterproofing is provided between the buckle body and the signal module.

Alternatively, the signal module may be secured by being built into the buckle body. The buckle body may comprise a plastic moulding which has a cavity adapted to receive the signal module.

In order to fully understand the invention, a preferred embodiment will be described. However, the invention is not to be limited or confined to the combination of features in this embodiment. Variations and additions will be readily apparent to a person skilled in the art. These variations and additions are to be included within the scope of the invention.

The embodiment is illustrated in the accompanying drawings in which;

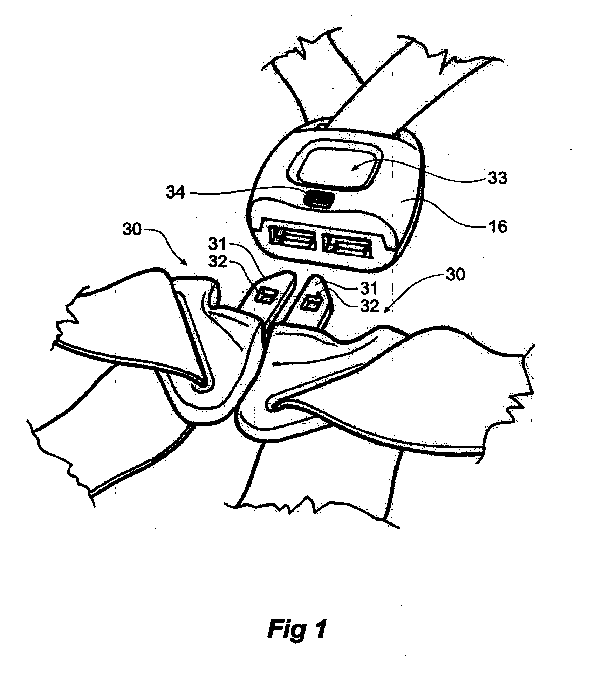

Figure 1 shows a perspective view of a buckle body and a pair of buckle connectors,
Figure 2 shows schematically the operation of the resilient member between the latching bar and the switch of the signal module,
Figures 3 and 5 show alternative connection means to secure the signal module in respect of the buckle body, and
Figures 6 and 7 show an alternative actuator.

The buckle described in this embodiment is in accordance with the buckle shown and illustrated in the US Patent Specifications US4425688, US4617705, US5023981 and US5142748. The buckles use a latching bar 10 that is spring-loaded and moves between a first and second position. Operation of the latching bar 10 is via the tongue 31 of buckle connectors 30 which locate within the buckle body 16. In this embodiment, a pair of tongues 31 or buckle connectors 30 are used although the invention will function equally with a single buckle connector 30.

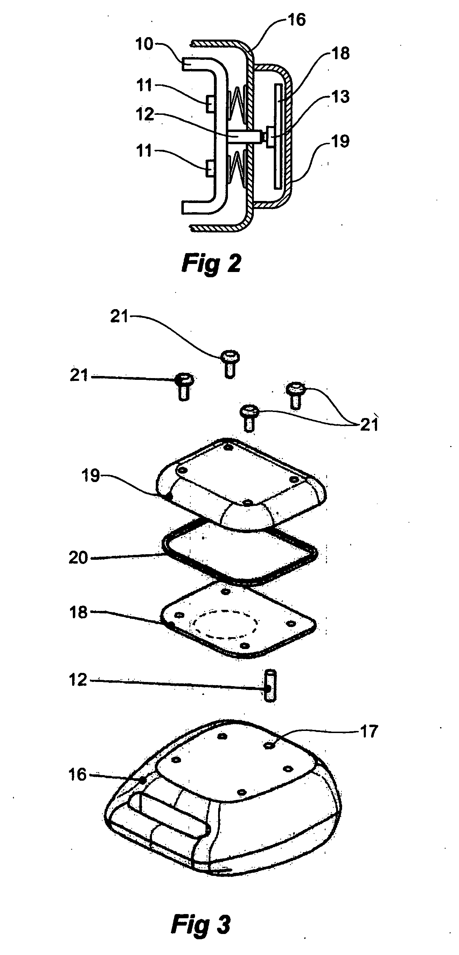

Referring to Figure 2, when latching bar 10 is in its first position, springs 15 under the latching bar 10 are compressed and the latching bar 10 is held in position by a member (not illustrated) that has moved out of the way upon insertion of both tongues 31. Once both tongues 31 are inserted, the springs 15 move the latching bar 10 into its second or latching position. In this position, projections 11 on the latching bar 10 locate with apertures 32 in each of the tongues 31.

In this embodiment, the resilient member comprises a cylindrical pin 12 that is formed from a resilient plastic material. This may comprise a modified polypropylene or could also comprise a natural or artificial rubber or a silicone component. The degree of resilience of the pin 12 will be described below.

The pin 12 is located between the latching bar 10 and switch 13 on the signal module 14. When the latching bar 10 is in its first position the pin 12 is compressed and thereby operates a switch means, which in this embodiment is a spring-loaded switch 13. The compression of pin 12 operates the spring-loaded switch 13 and holds it closed.

When the latching bar 10 moves to its second or latching position, the pin 12 is no longer compressed so switch 13 opens.

The compressed and non-compressed states of the pin 12 are used to close or open respectively the switch 13. The closing or the opening of the switch 13 can be used to actuate the signal module 14.

In this embodiment, upon insertion of the buckle connectors 30, the latching bar 10 moves to its second position where the pin 12 is uncompressed. Therefore, the opening of switch 13 causes the signal module 14 to emit an audible signal. This audible signal is only provided upon the latching bar 10 moving into its second position and it will only do this upon proper latching of the buckle connectors 30 to the buckle body 16. Therefore, the signal module 14 provides an audible signal of the buckle being properly latched.

The buckles shown in the above-mentioned US Patent specifications have a release button 33 which is depressed to release the buckle connectors 30. The depression of the button 33 causes the latching bar 10 to move back to its first position which in turn compresses the pin 12 between the latching bar 10 and switch 13. This again provides a signal to activate the signal module 14 which in turn provides the audible signal to indicate that the buckle connectors 30 have been released from the buckle body 16.

The above described operation provides a signal or alarm that can be used firstly to identify or to confirm that the buckle connectors 30 have been correctly latched to the buckle body 16. The audible signal produced upon the release of the buckle connectors 30 will provide an audible warning or alarm if the buckle is inadvertently released.

Any movement of the release button 33 of the buckle can provide sufficient movement to cause the pin 12 to operate the switch 13. This can produce an audible signal when a child is playing with the release button 33.

Figures 3 to 5 show various means of attaching the signal module 14 to the buckle body 16. Referring firstly to Figure 3, the buckle body 16 has an aperture 17 through which the pin 12 locates. The aperture 17 is positioned so that the pin 12, when inserted, abuts against the latching bar 10. The signal module 14 has a printed circuit board 18 which has electronic componentry, battery and speaker to produce the necessary audible signal. In addition, the switch 13 (not shown in this drawing) is attached to the printed circuit board 18 and is positioned adjacent to pin 12. A housing 19 locates over the printed circuit board 18 and a seal 20 locates between the housing 19 and the buckle body 16. Threaded fasteners 21 are used to secure the housing 19 of the buckle body 16.

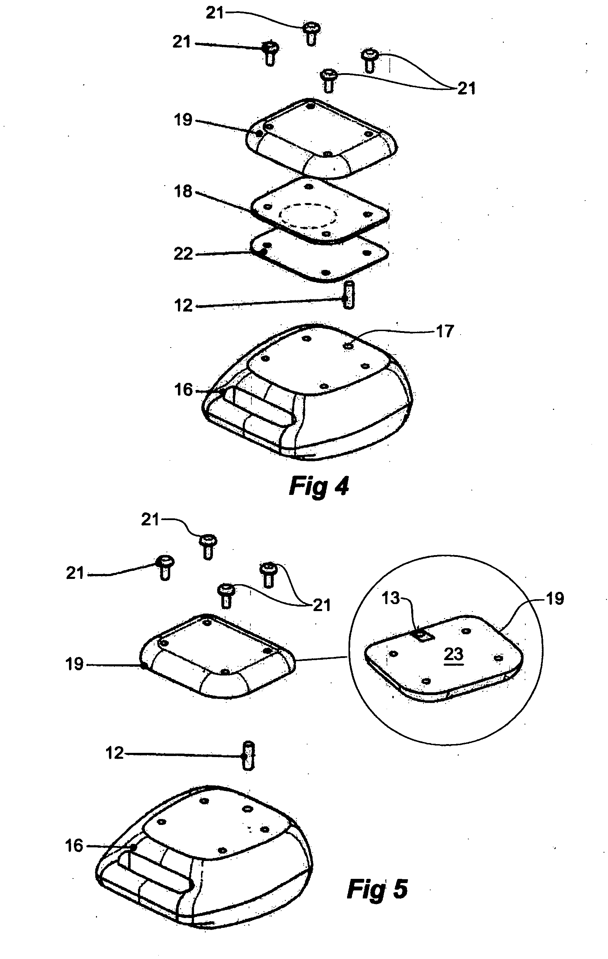

An alternative arrangement is shown in Figure 4 where a membrane seal 22 is used with the printed circuit board 18 being located between the membrane seal 22 and the housing 19. The edge of the housing 19 abuts against the seal 22 so that it is held between the housing 19 and the buckle body 16. The membrane seal is sufficiently resilient to enable the pin 12 to operate the switch through the membrane seal 22.

Figure 5 shows a further embodiment in which housing 19 is a fully sealed unit with the printed circuit board 18 located within it. The switch 13 is located on the underside of the module 19 and is positioned so that the pin 12 will activate the switch 13.

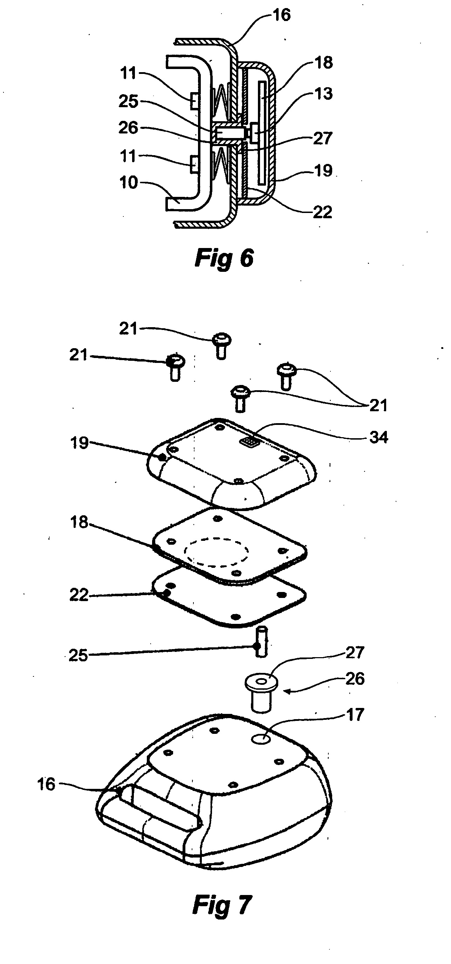

Figures 6 and 7 show an alternative arrangement for the actuator. In this embodiment, it comprises a steel pin 25 which is located in a resilient boot 26 made from an elastomeric material. The pin 25 locates into the boot 26 so that there is a resilient portion located between the pin 25 and the latching bar 10.

The boot 26 has a flange 27 which locates on the outer surface of the buckle body 16 and is held in place by either the circuit board 18 or by the membrane seal 22.

A light 34 is provided that illuminates when an alert signal is generated. The light 34 illuminates at the same time that an audible signal is produced.

As will be seen from the above description, the invention provides a simple means of connecting an electronic means to an existing buckle. The pin which actives the electronic module switch is connected to the buckle mechanism so as to provide accurate mechanical movement that corresponds to the latched or unlatched state of the buckle.

## Claims

1. A buckle having a means for providing an alert upon use of the buckle comprising:
a buckle body (16),
at least one buckle connector (30) that releasably connects to the buckle body (16),
a buckle mechanism (10) within the buckle body (16) that latches to the buckle connector (30) to hold it with respect to the buckle body (16), the buckle mechanism (10) also being operable to release the buckle connector (30),
**characterised in that** a signal module (14) attached with respect to the buckle body (16) that produces an alert signal,
switch means (13) on the signal module (14) that, when operated, causes the signal module (14) to produce the alert signal, and
an actuator (12) that is moved by either the buckle mechanism (10) or the buckle connector (3 0) to operate the switch means (13) when the buckle connector (3 0) connects or disconnects to the buckle body (16).

2. A buckle according to claim 1 wherein the alert signal comprises an audible signal and/or a visual signal.

3. A buckle according to claim 1 or 2 further comprising a transmitter that transmits an alert signal to receiver at a remote location.

4. A buckle according to any one of the preceding claims wherein the signal module (14) attaches to the exterior surface of the buckle body.

5. A buckle according to claim 4 wherein the signal module (14) comprises a housing (19) and a circuit board (18) located within the housing (19), the circuit board (18) including the switch means (13), power source, speaker and circuitry to produce an audible signal upon operation of the switch means (13).

6. A buckle according to claim 5 wherein the actuator (12) comprises a resilient member that locates between the switch means (13) and the buckle mechanism (10).

7. A buckle according to claim 6 wherein the portion of the buckle mechanism (10) that the actuator (12) bears against is a latching bar (10).

8. A buckle according to claim 7 wherein the actuator (12) is compressed when the latching bar (10) is in a first position to thereby apply constant pressure against the switch means (13) and un-compressed when the latching bar (10) is in a second position so that the switching means (13) is not operated.

9. A buckle according to any one of claims 6 to 8 wherein the actuator (12) is a resilient polymeric pin.

10. A buckle according to any one of claims 6 to 8 wherein the actuator (12) is a combination of a metal pin (25) and a resilient polymeric portion (26).

11. A buckle according to claim 10 wherein the polymeric portion comprises a boot (26) that engages one end of the metal pin (25).
